# EUROPÄISCHE PATENTSCHRIFT

(11) **EP 0 864 250 B1**
(45) Veröffentlichungstag und Bekanntmachung des Hinweises auf die Patenterteilung: **26.02.2003**
(21) Anmeldenummer: 98104360.7
(22) Anmeldetag: 11.03.1998
(51) Int. Cl.: A01D 75/28, B60K 17/32

(54) **Antriebsachse**
Drive axle
Essieu d'entrainement

(30) Priorität: 12.03.1997 DE 19710174; 16.04.1997 DE 19715837
(43) Veröffentlichungstag der Anmeldung: 16.09.1998
(73) Patentinhaber: SAME DEUTZ-FAHR S.P.A., 24047 Treviglio (Bergamo) (IT)
(72) Erfinder: von Allwörden, Wilhelm, 89168 Oberstotzingen (DE); Staudinger, Ingo, 89426 Wittislingen (DE)
(74) Vertreter: Quinterno, Giuseppe

(56) Entgegenhaltungen:
- EP-A- 0 736 244
- GB-A- 784 185
- US-A- 2 709 329
- US-A- 3 731 470

## Beschreibung

Die Erfindung betrifft eine Antriebsachse für Fahrzeuge, vorzugsweise für selbstfahrende Erntemaschinen, wie Mähdrescher, insbesondere nach dem Oberbegriff des Patentanspruchs 1.

Vor allem Mähdrescher benötigen zur optimalen Funktion ihrer Einzelaggregate eine waagerechte Stellung, unabhängig von der Topografie des Ackers. In der DE- 41 31 433 C2 wird ein Fahrzeug mit einer Antriebsachse beschrieben, an deren Enden entweder je ein Vorgelegegetriebe direkt oder unter Zwischenschaltung einer Schwenkvorrichtung angeschraubt ist. Die Schwenkvorrichtung, die dem Hangausgleich dient, besteht aus je einem Gehäuse mit einem Lagerkörper, in dem je ein Schwenkarm schwenkbar gelagert ist, der mit dem Vorgelegegetriebe verschraubt ist. Schwenkarm und Gehäuse werden über einen Hydraulikzylinder gegeneinander verdreht, wodurch die Bodenfreiheit des Fahrzeugs variierbar ist.

Dem Vorteil der gleichen Achsen und Vorgelegegetriebe für beide Versionen steht der gravierende Nachteil teurer Zusatzteile, wie Gehäuse und Schwenkarme sowie deren Montage entgegen. Außerdem ändert sich beim Umrüsten die Radspur.

Der Erfindung liegt deshalb die Aufgabe zugrunde, eine Antriebsachse für landwirtschaftliche Erntemaschinen, wie Mähdrescher, zu schaffen, die bei geringem Kostenaufwand und weitgehend gleichbleibender Radspur für ebenes Gelände oder mit Hangausgleich ausführbar ist.

Die Aufgabe wird dadurch gelöst, daß beide Endgetriebe eine Befestigungsfläche zur festen Verbindung mit entsprechenden Flanschflächen an den Enden des Achstragkörpers sowie ein Hohlwellenstück aufweisen, das bei Hangausgleich in den Lagern des Achstragkörpers geführt ist. Auf diese Weise ist nur eine Ausführung des Endgetriebes für beide Versionen erforderlich. Es kann auch vorteilhaft sein, das Hohlwellenstück nur für die Version mit Hangausgleich zu bearbeiten und im Normalfall unbearbeitet zu lassen.

Eine vorteilhafte Weiterbildung der Erfindung besteht darin, daß die Antriebsachse einen ersten Achstragkörper mit Flanschflächen an dessen Enden zur Befestigung der Endgetriebe aufweist oder alternativ einen zweiten Achstragkörper mit Lagern zur Führung der Hohlwellenstücke sowie mit Konsolen für Lagerbolzen zur Abstützung des einen Endes der Schwenkzylinder. Dadurch sind zwar zwei unterschiedliche Achstragkörper erforderlich, diese sind jedoch einfach und ohne Montagebedarf gestaltet.

Dadurch, daß an den Befestigungsflächen der Endgetriebe je ein Lagerzapfen zur Anlenkung des anderen Endes der Schwenkzylinder befestigbar ist, wird für den Lagerzapfen keine zusätzliche Befestigungsfläche benötigt, was zur Kosteneinsparung beiträgt.

Von Vorteil ist auch, daß der zweite Achstragkörper, die Konsolen und die Lager eine Baueinheit bilden. Dadurch werden Bearbeitungsund Montagekosten gespart und eine besonders steife Baueinheit erzielt.

Dasselbe gilt auch, wenn die Hohlwellenstücke einstückig mit den Endgetrieben ausgebildet sind.

Es kann aber auch vorteilhaft sein, wenn die Hohlwellenstücke an den Endgetrieben befestigbar sind. Der Notwendigkeit einer zusätzlichen Anflanschfläche für das Hohlwellenstück und von dessen kompletter Bearbeitung steht der Vorteil eines als einfaches Drehteil ausgebildeten Hohlwellenstücks gegenüber.

Eine Alternative zur Lösung von Anspruch 1 besteht darin, daß der Achstragkörper als Universalachstragkörper ausgebildet ist, der an seinen beiden Enden sowohl Flanschflächen zur Verbindung mit Befestigungsflächen der Endgetriebe als auch Lager zum schwenkbaren Lagern von mit den Endgetrieben verbundenen und zu deren Eingangswellen koaxial angeordneten Hohlwellenstücke sowie Lagerbolzen zur Abstützung des einen Endes von Schwenkzylindern aufweist. Hierbei ist nur eine Ausführung des Achstragkörpers erforderlich. Die damit mögliche größere Stückzahl kompensiert den baulichen Mehraufwand bei den einzelnen Achstragkörpern.

Eine Alternative zu dieser Lösung besteht darin, für ebenes Gelände anstelle des Anflanschens der Endgetriebe diese über ein starres Bauelement, das die Schwenkzylinder ersetzt, verdrehfest abzustützen. In diesem Falle können die Flanschflächen des Universalachstragkörpers entfallen, bzw. ein Achstragkörper benutzt werden, der ursprünglich nur für Hangausgleich konzipiert ist.

Vorteilhaft ist auch, wenn ein Ende des Schwenkzylinders bzw. der Bauelemente mittels Schwenkgabeln an den Endgetrieben befestigbar ist, wobei die Endgetriebe Fixierflächen zum Befestigen der Schwenkgabeln aufweisen und wenn die Fixierflächen, die um die Hohlwellenstücke herum angeordnet sind, einen Zentrierbund für eine dazu passende Ausnehmung der Schwenkgabeln und Gewindebohrungen aufweisen, wobei Zentrierbund und Gewindebohrungen konzentrisch und drehsymmetrisch zum Hohlwellenstück angeordnet sind. Auf diese Weise ist die Schwenkgabel sauber geführt und kann in der für die jeweilige Seite erforderlichen Position an die Endgetriebe angeschraubt werden. Dadurch können beide Endgetriebe und Schwenkgabeln identisch ausgeführt werden.

Dadurch, daß bei dem Universalachstragkörper zwischen dem Hohlwellenstück und dem Lager ein Distanzring einbaubar ist, wird zwischen den Flanschflächen des Universalachstragkörpers und den Befestigungsflächen der Endgetriebe bei der Version für Hangausgleich das erforderliche Bewegungsspiel gewährleistet.

Durch eine vorteilhafte Ausbildung der Erfindung, bei der die Abmessungen aller Achstragkörper so gewählt sind, daß die Spurweite der Antriebsräder mit und ohne Hangausgleich in etwa gleich ist, wird erreicht, daß die für den Straßenverkehr vorgeschriebene maximale Breite der landwirtschaftlichen Erntemaschine bei allen Versionen eingehalten wird und zur Dimensionierung der Einzelaggregate für eine maximale Ernteleistung ausnutzbar ist.

Weitere Merkmale der Erfindung ergeben sich aus der folgenden Beschreibung und der Zeichnung, in der ausgeführte Beispiele der Erfindung schematisch dargestellt sind.
Es zeigen:
- Figur 1:: Antriebsachse mit Hangausgleich in Explosionsdarstellung,
- Figur 2:: Antriebsachse ohne Hangausgleich in Explosionsdarstellung,
- Figur 3:: Endgetriebe, wahlweise mit und ohne Hangausgleich in Explosionsdarstellung.

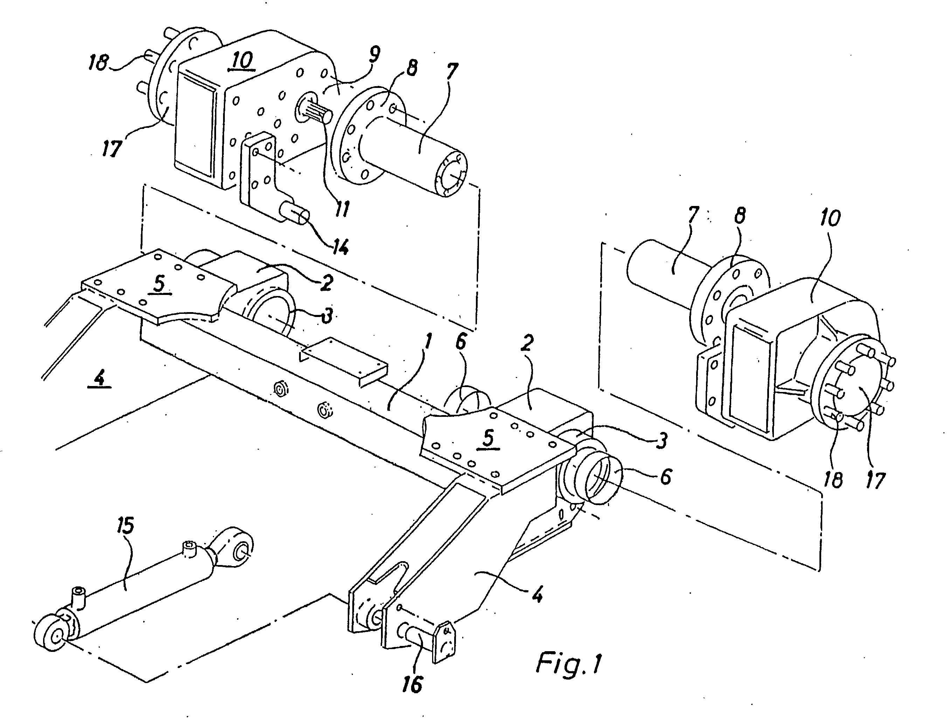

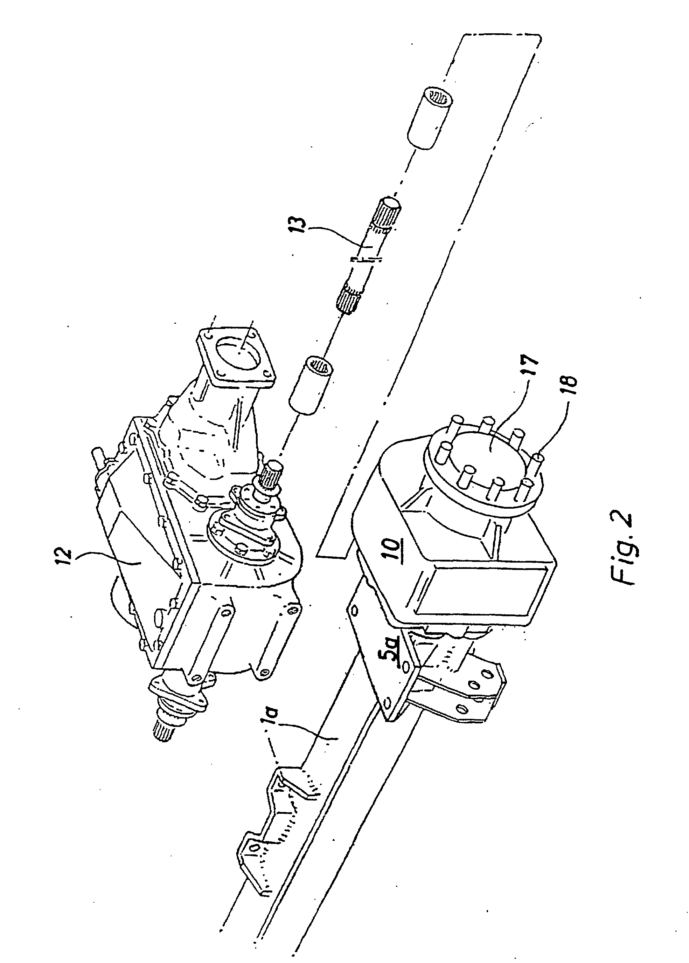

Figur 1 zeigt eine Antriebsachse mit Hangausgleich, die gegenüber der Version von Figur 2 einen modifizierten zweiten Achstragkörper 1 aufweist, an dessen beiden Enden ein Lager 2 mit einer Lagerbüchse 3 und eine Konsole 4 angeschweißt sind. Eine Platte 5 dient zur Befestigung der Antriebsachse am Mähdrescher und zur optimalen Befestigung von Lager 2 und Konsole 4 am zweiten Achstragkörper 1. In der Lagerbüchse 3 sind Lagerschalen 6 vorgesehen, die zur Lagerung eines Hohlwellenstücks 7 dienen. Dieses wird mittels eines Flansches 8 an einer Befestigungsfläche 9 eines Endgetriebes 10 angeschraubt und zwar koaxial zu einer Eingangswelle 11. Diese dient der Verbindung mit einem Zentralgetriebe 12 über Verbindungswellen 13, die beide in Figur 1 nicht dargestellt sind. Die Lage der Hohlwellenstücke 7 erlaubt ein für die Verbindungswellen 13 zwangfreies Schwenken der Endgetriebe 10. An der Befestigungsfläche 9 wird ferner ein Lagerzapfen 14 angeschraubt, an dem ein Schwenkzylinder 15 angreift, dessen anderes Ende sich an einem Lagerbolzen 16 der Konsole 4 schwenkbar abstützt.

Die Endgetriebe 10 weisen eine Ausgangswelle 17 auf, die parallel zur Eingangswelle 11 versetzt ist und an der Gegenseite zur Eingangswelle 11 austritt. Sie dient zur Befestigung der nicht dargestellten Räder, die mit Stehbolzen 18 an der Ausgangswelle 17 angeschraubt werden. Durch die Bewegung der Schwenkzylinder 15 werden Endgetriebe 10 und Räder um die Achse der Hohlwellenstücke 7 in den Lagerbüchsen 3 je nach Neigung des Mähdreschers gegensinnig geschwenkt, und bewirken so dessen horizontale Lage.

Für vorwiegend ebenes Gelände ist die in Figur 2 dargestellte Version der Antriebsachse ohne Hangausgleich geeignet. In der Mitte des ersten Achstragkörpers 1a wird ein Zentralgetriebe 19, an beiden Enden werden die Endgetriebe 10 angeschraubt. Zentralgetriebe 12, Endgetriebe 10 und die sie verbindenden Wellen 13 sind mit der Version von Figur 1 identisch. Die Platten 5a dienen zur Befestigung der Antriebsachse am Mähdrescher.

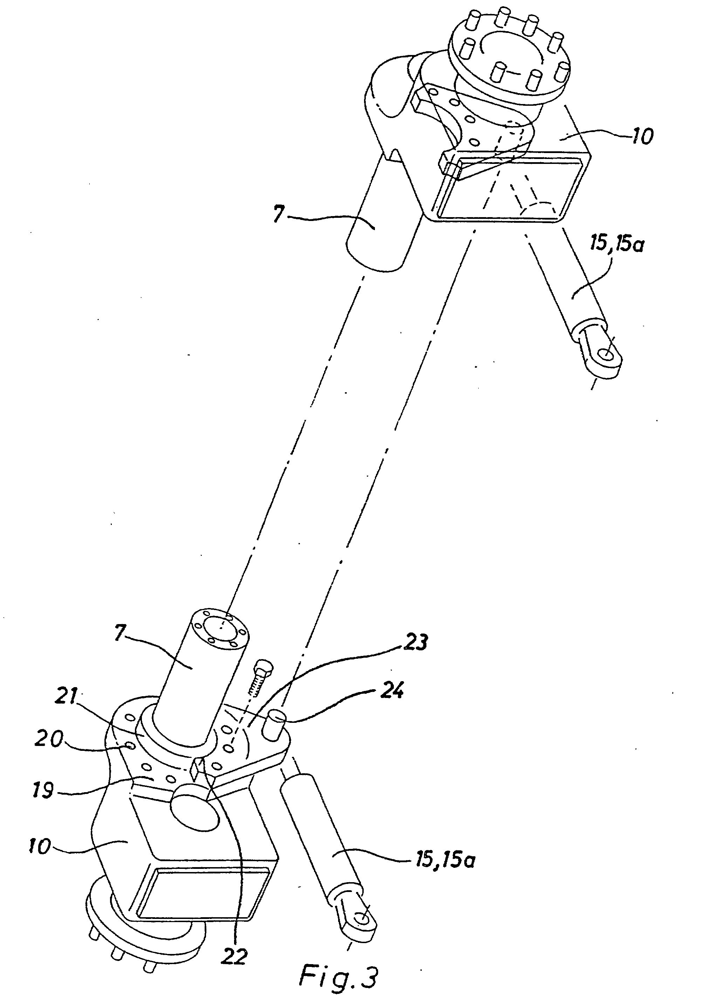

Figur 3 zeigt eine Version, die wahlweise mit oder ohne Hangausgleich ausführbar ist. Der nicht dargestellte Achstragkörper weist lediglich Lager für die Hohlwellenstücke 7 der Endgetriebe 10 auf. An diesen sind um die Hohlwellenstücke 7 herum Fixierflächen 19 angeordnet. Diese weisen einen Zentrierbund 21 für eine dazu passende Ausnehmung 22 einer Schwenkgabel 23 sowie Gewindebohrungen 20 auf. Der Zentrierbund 21 und die Gewindebohrungen 20 sind konzentrisch und drehsymmetrisch zum Hohlwellenstücke 7 angeordnet. Dadurch können gleiche Endgetriebe 10 und Schwenkgabeln 23 für beide Enden des Achstragkörpers verwendet werden, lediglich die Anschraubposition der Schwenkgabeln muß entsprechend geändert werden.

Bei Hangausgleich werden Schwenkzylinder 15, bei starrem Betrieb hier nicht abgebildete starre Bauelemente 15a (z. B. Stangen) an den Lagerbolzen 24 der Schwenkgabeln 23 befestigt.

Die Längenabmessungen aller Achstragkörper 1a sind so gewählt, daß die Radspur die durch die Zulassungsvorschriften vorgegebene Norm ausnutzt.

## Patentansprüche

1. Antriebsachse für Fahrzeuge, vorzugsweise für selbstfahrende Erntemaschinen, wie Mähdrescher, die mit einem Hangausgleich ausrüstbar sind, mit einem Achstragkörper, einem Zentralgetriebe und zwei mit diesem durch Antriebswellen über je eine Eingangswelle verbundene Endgetriebe, die entweder an den Enden des Achstragkörpers fest oder bei Hangausgleich in koaxial zu den Eingangswellen am Achstragkörper befestigten Lagern gelagert und mittels Schwenkzylindern schwenkbar angeordnet sind, wobei an zu den Eingangswellen parallel versetzten Abtriebswellen die Antriebsräder befestigt sind,
***dadurch gekennzeichnet*, daß** beide Endgetriebe (10) eine Befestigungsfläche (9) zur festen Verbindung mit entsprechenden Flanschflächen an den Enden des Achstragkörpers sowie ein Hohlwellenstück (7) aufweisen, das bei Hangausgleich in den Lagern (2) des Achstragkörpers geführt ist.

2. Antriebsachse nach Anspruch 1,
***dadurch gekennzeichnet*, daß** die Antriebsachse einen ersten Achstragkörper (1a) mit Flanschflächen an dessen Enden zur Befestigung der Endgetriebe (10) aufweist oder alternativ einen zweiten Achstragkörper (1) mit Lagern (2) zur Führung der Hohlwellenstücke (7) sowie mit Konsolen (4) für Lagerbolzen (16) zur Abstützung des einen Endes der Schwenkzylinder (15).

3. Antriebsachse nach einem der Ansprüche 1 oder 2,
***dadurch gekennzeichnet,* daß** an den Befestigungsflächen (9) der Endgetriebe (10) je ein Lagerzapfen (14) zur Anlenkung des anderen Endes der Schwenkzylinder (15) befestigbar ist.

4. Antriebsachse nach einem der vorhergehenden Ansprüche,
***dadurch gekennzeichnet*, daß** der zweite Achstragkörper (1), die Konsolen (4) und die Lager (2) eine Baueinheit bilden.

5. Antriebsachse nach einem der vorhergehenden Ansprüche,
***dadurch gekennzeichnet*, daß** die Hohlwellenstücke (7) einstückig mit den Endgetrieben (10) ausgebildet sind.

6. Antriebsachse nach einem der vorhergehenden Ansprüche,
***dadurch gekennzeichnet,* daß** die Hohlwellenstücke (7) an den Endgetrieben (10) befestigbar sind.

7. Antriebsachse für Fahrzeuge, vorzugsweise für selbstfahrende Erntemaschinen, wie Mähdrescher, die mit einem Hangausgleich ausrüstbar sind, mit einem Achstragkörper, einem Zentralgetriebe und zwei mit diesem durch Antriebswellen über je eine Eingangswelle verbundene Endgetriebe,
***dadurch gekennzeichnet*, daß** der Achstragkörper als Universal-Achstragkörper ausgebildet ist, der an seinen beiden Enden sowohl Flanschflächen zur festen Verbindung mit Befestigungsflächen (9) der Endgetriebe (10) als auch Lager (2) zum schwenkbaren Lagern von mit den Endgetrieben (10) verbundenen und zu deren Eingangswellen (11) koaxial angeordneten Hohlwellenstücken (7) sowie Lagerbolzen (16) zur Abstützung des einen Endes von Schwenkzylindern (15) aufweist.

8. Antriebsachse nach Anspruch 7,
***dadurch gekennzeichnet*, daß** bei dem Universal-Achstragkörper zwischen dem Hohlwellenstück (7) und dem Lager (2) ein Distanzring einbaubar ist.

9. Antriebsachse für Fahrzeuge, vorzugsweise für selbstfahrende Erntemaschinen, wie Mähdrescher, die mit einem Hangausgleich ausrüstbar sind, mit einem Achstragkörper, einem Zentralgetriebe und zwei mit diesem durch Antriebswellen über je eine Eingangswelle verbundene Endgetriebe, die in koaxial zu den Eingangswellen am Achstragkörper befestigten Lagern mittels Hohlwellenstücken gelagert und mittels Schwenkzylindern schwenkbar angeordnet sind,
***dadurch gekennzeichnet,* daß** die Schwenkzylinder (15) durch starre Bauelemente (15a) ersetzbar sind, die die Endgetriebe (10) verdrehfest fixieren.

10. Antriebsachse nach Anspruch 9,
***dadurch gekennzeichnet,* daß** ein Ende der Schwenkzylinder (15) bzw. der Bauelemente (15a) mittels Schwenkgabeln (23) an den Endgetrieben (10) befestigbar ist, wobei die Endgetriebe (10) Fixierflächen (19) zum Befestigen der Schwenkgabeln (23) aufweisen.

11. Antriebsachse nach Anspruch 9 oder 10,
***dadurch gekennzeichnet*, daß** die Fixierflächen (19), die um die Hohlwellenstücke (7) herum angeordnet sind, einen Zentrierbund (21) für eine dazu passende Ausnehmung (22) der Schwenkgabeln (23) und Gewindebohrungen (20) aufweisen, wobei Zentrierbund (21) und Gewindebohrungen (20) konzentrisch und drehsymmetrisch zum Hohlwellenstück (7) angeordnet sind.

12. Antriebsachse nach einem der vorhergehenden Ansprüche,
***dadurch gekennzeichnet,* daß** die Abmessungen aller Achstragkörper so gewählt sind, daß die Spurweite der Antriebsräder mit und ohne Hangausgleich in etwa gleich ist.

## Claims

1. Drive axle for vehicles, preferably for self-propelled harvesting machines such as combine harvesters, which can be provided with slope compensation, having an axle support body, a central transmission and two final drives, which are connected to the latter by drive shafts via respective input shafts, are either mounted in a fixed manner at the ends of the axle support body or, in the case of slope compensation, are mounted in bearings fixed on the axle support body coaxially with the input shafts and are arranged in such a way as to be pivotable by means of pivoting cylinders, the driven wheels being fixed on driven shafts offset in parallel with the input shafts, **characterised in that** both final drives (10) have a fixing surface (9) for fixed connection to corresponding flange surfaces at the ends of the axle support body and have a hollow shaft section (7), which is guided in the bearings (2) of the axle support body in the case of slope compensation.

2. Drive axle according to Claim 1, **characterised in that** the drive axle has a first axle support body (1a) with flange surfaces at its ends for fixing the final drives (10) or, as an alternative, has a second axle support body (1) with bearings (2) for guiding the hollow shaft sections (7) and with brackets (4) for bearing pins (16) for supporting one end of the pivoting cylinders (15).

3. Drive axle according to either of Claims 1 and 2, **characterised in that** respective bearing journals (14) for the pivotal connection of the other end of the pivoting cylinders (15) can be fixed on the fixing surfaces (9) of the final drives (10).

4. Drive axle according to one of the preceding claims, **characterised in that** the second axle support body (1), the brackets (4) and the bearings (2) form a subassembly.

5. Drive axle according to one of the preceding claims, **characterised in that** the hollow shaft sections (7) are of one-piece construction with the final drives (10).

6. Drive axle according to one of the preceding claims, **characterised in that** the hollow shaft sections (7) can be fixed to the final drives (10).

7. Drive axle for vehicles, preferably for self-propelled harvesting machines such as combine harvesters, which can be provided with slope compensation, having an axle support body, a central transmission and two final drives, which are connected to the latter by drive shafts via respective input shafts, **characterised in that** the axle support body is designed as a universal axle support body, which, at both its ends, has both flange surfaces for fixed connection to fixing surfaces (9) of the final drives (10) and bearings (2) for the pivotable mounting of hollow shaft sections (7), which are connected to the final drives (10) and arranged coaxially with their input shafts (11), and bearing pins (16) for supporting one end of pivoting cylinders (15).

8. Drive axle according to Claim 7, **characterised in that** a distance ring can be fitted between the hollow shaft section (7) and the bearing (2) in the case of the universal axle support body.

9. Drive axle for vehicles, preferably for self-propelled harvesting machines such as combine harvesters, which can be provided with slope compensation, having an axle support body, a central transmission and two final drives, which are connected to the latter by drive shafts via respective input shafts, are mounted in bearings fixed on the axle support body coaxially with the input shafts and are arranged in such a way as to be pivotable by means of pivoting cylinders, **characterised in that** the pivoting cylinders (15) can be replaced by rigid components (15a), which fix the final drives (10) firmly against rotation.

10. Drive axle according to Claim 9, **characterised in that** one end of the pivoting cylinders (15) or components (15a) can be fixed on the final drives (10) by means of pivoting forks (23), the final drives (10) having fixing surfaces (19) for fixing the pivoting forks (23).

11. Drive axle according to Claim 9 or 10, **characterised in that** the fixing surfaces (19), which are arranged around the hollow shaft sections (7), have a centring collar (21) for a matching aperture (22) in the pivoting forks (23) and threaded holes (20), the centring collar (21) and the threaded holes (20) being arranged concentrically and in a rotationally symmetrical manner relative to the hollow shaft section (7).

12. Drive axle according to one of the preceding claims, **characterised in that** the dimensions of all the axle support bodies are chosen in such a way that the track width of the driven wheels is approximately the same with and without slope compensation.

## Revendications

1. Essieu moteur pour véhicules, de préférence pour moissonneuses autotractées, telles que des moissonneuses-batteuses, qui peuvent être équipés d'un système de compensation de pente, comportant un corps de support d'essieu, une transmission centrale et deux mécanismes d'extrémité reliés à cette transmission centrale par des arbres d'entraînement et par l'intermédiaire respectivement d'un arbre d'entrée et qui sont montés de façon fixe sur les extrémités du corps de support d'essieu ou, dans le cas d'une compensation de pente, sont montés dans des paliers qui sont fixés coaxialement aux arbres d'entrée sur le corps de support d'essieu, et sont disposés de manière à pouvoir pivoter à l'aide de vérins de pivotement, les roues motrices étant fixées à des arbres menés, qui sont décalés parallèlement aux arbres d'entrée, **caractérisé en ce que** les deux mécanismes d'extrémité (10) comportent une surface de fixation (9) pour la liaison fixe avec des surfaces de bride correspondantes sur les extrémités du corps de support d'essieu, ainsi qu'un élément d'arbre creux (7), qui est guidé, lors de la compensation de pente, dans les paliers (2) du corps de support d'essieu.

2. Essieu moteur selon la revendication 1, **caractérisé en ce que** l'essieu moteur comporte un premier corps de support d'essieu (1a) comportant des surfaces de brides au niveau de ses extrémités pour la fixation des mécanismes d'extrémité (10), ou sinon un second corps de support d'essieu (1) comportant des paliers (2) pour guider les éléments d'arbre creux (7), ainsi que des consoles (4) pour des axes de palier (16) pour supporter l'une des extrémités du vérin de pivotement (15).

3. Essieu moteur selon l'une des revendications 1 ou 2, **caractérisé en ce qu'**un tourillon respectif (14) pour l'articulation de l'autre extrémité du vérin de pivotement (15) peut être fixé sur les surfaces de fixation (9) des mécanismes d'extrémité (10).

4. Essieu moteur selon l'une des revendications précédentes, **caractérisé en ce que** le second corps de support d'essieu (1), les consoles (4) et les paliers (2) forment une unité de construction.

5. Essieu moteur selon l'une des revendications. précédentes, **caractérisé en ce que** les éléments d'arbre creux (7) sont réalisés d'un seul tenant avec les mécanismes d'extrémité (10).

6. Essieu moteur selon l'une des revendications précédentes, **caractérisé en ce que** les éléments d'arbre creux (7) peuvent être fixés sur les mécanismes d'extrémité (10).

7. Essieu moteur pour véhicules , de préférence pour moissonneuses autotractées, telles que des moissonneuses-batteuses, qui peuvent être équipés d'un système de compensation de pente, comportant un corps de support d'essieu, une transmission centrale et deux mécanismes d'extrémité reliés à cette transmission centrale par des arbres d'entraînement et par l'intermédiaire respectivement d'un arbre d'entrée, **caractérisé en ce que** le corps de support d'essieu est agencé sous la forme d'un corps de support d'essieu universel, qui comporte, au niveau de ses deux extrémités, aussi bien des surfaces de bride pour la liaison fixe avec des surfaces de fixation (9) des mécanismes d'extrémité (10) que des paliers (2) pour le support pivotant d'éléments d'arbre creux (7), qui sont reliés aux mécanismes d'extrémité (10) et sont disposés coaxialement à leurs arbres d'entrée (11), ainsi que des axes de palier (16) pour supporter l'une des extrémités de vérins de pivotement (15).

8. Essieu moteur selon la revendication 7, **caractérisé en ce que** dans le cas du support d'essieu universel, une bague-entretoise peut être montée entre l'élément d'arbre creux (7) et le palier (2).

9. Essieu moteur pour véhicules automobiles, notamment pour moissonneuses autotractées, telles que des moissonneuses-batteuses, qui peuvent être équipées d'un système de compensation de pente, comportant un corps de support d'essieu, une transmission centrale et deux mécanismes d'extrémité reliés à cette transmission par des arbres d'entraînement, et par l'intermédiaire respectivement d'un arbre d'entrée, et qui sont montés au moyen d'éléments d'arbres creux dans des paliers fixés coaxialement aux arbres d'entrée sur le corps de support d'essieu, et sont disposés de manière à pouvoir pivoter au moyen de vérins de pivotement, **caractérisé en ce que** les vérins de pivotement (15) peuvent être remplacés par des éléments de construction rigides (15a), qui immobilisent en rotation les mécanismes d'extrémité (10).

10. Dispositif d'entraînement selon la revendication 9, **caractérisé en ce qu'**une extrémité des vérins de pivotement (15) ou des éléments de construction (15a) peut être fixée au moyen de fourches de pivotement (23) sur les mécanismes d'extrémité (10), les mécanismes d'extrémité (10) possédant des surfaces d'immobilisation (19) servant à fixer les fourches de pivotement (23).

11. Essieu moteur selon les revendications 9 ou 10, **caractérisé en ce que** les parties d'immobilisation (19), qui sont disposées autour des éléments d'arbres creux (7), comportent un collet de centrage (21) pour un évidement (22) des fourches de pivotement (23), qui est adapté à ce collet, et des perçages taraudés (20), le collet de centrage (21) et les perçages taraudés (20) étant disposés concentriquement et selon une symétrie de révolution par rapport à l'élément d'arbre creux (7).

12. Essieu moteur selon l'une des revendications précédentes, **caractérisé en ce que** les dimensions de tous les corps de support d'essieu sont choisis de telle sorte que la voie entre les roues motrices avec et sans compensation de pente est approximativement la même.
